# EUROPÄISCHE PATENTSCHRIFT

(11) **EP 3 949 285 B1**
(45) Veröffentlichungstag und Bekanntmachung des Hinweises auf die Patenterteilung: **17.09.2025**
(21) Anmeldenummer: 20713598.9
(22) Anmeldetag: 20.03.2020
(51) Int. Cl.: H04L 12/40

(54) **TEILNEHMERSTATION FÜR EIN SERIELLES BUSSYSTEM UND VERFAHREN ZUR KOMMUNIKATION IN EINEM SERIELLEN BUSSYSTEM**
SUBSCRIBER STATION FOR A SERIAL BUS SYSTEM AND METHOD FOR COMMUNICATION IN A SERIAL BUS SYSTEM
STATION D'ABONNÉ POUR UN SYSTÈME DE BUS SÉRIE ET PROCÉDÉ DE COMMUNICATION DANS UN SYSTÈME DE BUS SÉRIE

(30) Priorität: 26.03.2019 DE 102019204115
(43) Veröffentlichungstag der Anmeldung: 09.02.2022
(73) Patentinhaber: Robert Bosch GmbH, 70442 Stuttgart (DE)
(72) Erfinder: HARTWICH, Florian, 72762 Reutlingen (DE); MUTTER, Arthur, 73765 Neuhausen (DE)
(86) Internationale Anmeldenummer: PCT/EP2020/057889
(87) Internationale Veröffentlichungsnummer: WO 2020/193440

(56) Entgegenhaltungen:
- EP-A1- 2 247 075
- EP-A1- 2 521 319
- DE-B3- 102017 211 860
- US-A1- 2018 069 723

## Beschreibung

### Technisches Gebiet

Die vorliegende Erfindung betrifft eine Teilnehmerstation für ein serielles Bussystem und ein Verfahren zur Kommunikation in einem seriellen Bussystem, mit welchen neben dem reinen Datentransport auch andere Funktionen unterstützt werden, wie Safety (Funktionale Sicherheit), Security (Daten Sicherheit) und QoS (Quality of Service, Dienstgüte, wie beispielsweise Garantie einer maximalen Latenz für einen Rahmen, Zeitsynchronisation der Teilnehmerstationen (Knoten) in dem Bussystem.

### Stand der Technik

Für die Kommunikation zwischen Sensoren und Steuergeräten, beispielsweise in Fahrzeugen, wird aus Kostengründen anstelle einer Punkt-zu-Punkt-Verbindung derzeit immer häufiger ein Bussystem eingesetzt, in welchem Daten als Nachrichten im Standard ISO11898-I:2015 als CAN Protokoll-Spezifikation mit CAN FD übertragen werden. Die Nachrichten werden zwischen den Teilnehmerstationen des Bussystems, wie Sensor, Steuergerät, Geber, usw., übertragen. Hierbei wird CAN FD derzeit in der Einführungsphase im ersten Schritt meist mit einer Daten-Bitrate von 2Mbit/s bei der Übertragung von Bits des Datenfelds und mit einer Arbitrations-Bitrate von 500kbit/s bei der Übertragung von Bits des Arbitrationsfelds im Fahrzeug eingesetzt.

EP 2 521 319 A1 beschreibt ein CAN-Bussystem mit flexibler Datenrate, bei dem eine Kommunikation mit CAN FD beschrieben ist.

Über ein solches Bussystem werden immer mehr Informationen ausgetauscht. Insbesondere sollen neben dem reinen Datentransport auch andere Funktionen unterstützt werden, wie Safety (Funktionale Sicherheit), Security (Daten Sicherheit) und QoS (Quality of Service, Dienstgüte, wie beispielsweise Garantie einer maximalen Latenz für einen Rahmen, Zeitsynchronisation der Teilnehmerstationen (Knoten) in dem Bussystem. Auch besteht der Wunsch der Anwender, die Datenrate im Bussystem weiter zu steigern, um die Schnelligkeit der Datenübertragung im Bussystem zumindest beizubehalten und möglichst noch weiter zu erhöhen.

Hierfür ist es denkbar, dem Empfangsknoten mitzuteilen, welche Information sich in einem über den Bus gesendeten Rahmen befindet. Bei Classical CAN und CAN FD wird der Inhalt eines Rahmens über einen Rahmenidentifizierer (ID, Frame Identifier) mitgeteilt, welcher auch zur Arbitration verwendet wird. Das geht prinzipiell, weil jede Teilnehmerstation (Knoten) Rahmen mit exklusiven Rahmenidentifizierern sendet. Dieses entspricht einer flachen Zuordnung von Rahmenidentifizierer und Inhalt.

Je mehr Information dem Empfangsknoten über den über den Bus gesendeten Rahmen mitgeteilt wird, desto mehr Bits müssen für den Rahmenidentifizierer vorgehalten und dann über den Bus übertragen werden. Da ein Arbitrations-Bit jedoch deutlich länger als ein Daten-Bit ist, sinkt dadurch die Netto-Datenrate.

### Offenbarung der Erfindung

Daher ist es Aufgabe der vorliegenden Erfindung, eine Teilnehmerstation für ein serielles Bussystem und ein Verfahren zur Kommunikation in einem seriellen Bussystem bereitzustellen, welche die zuvor genannten Probleme lösen. Insbesondere sollen eine Teilnehmerstation für ein serielles Bussystem und ein Verfahren zur Kommunikation in einem seriellen Bussystem bereitgestellt werden, bei welchen möglichst viel Information über die Daten eines über den Bus gesendeten Rahmens übermittelbar ist, ohne dadurch die bisherige Datenrate für einen Rahmen zu senken, und ohne dadurch die Kompatibilität mit früheren Kommunikationsversionen der Teilnehmerstation zu verlieren, so dass eine Steigerung der Menge der Nutzdaten pro Rahmen im Vergleich zu früheren Kommunikationsversionen der Teilnehmerstation realisiert werden kann.

Die Aufgabe wird durch eine Teilnehmerstation für ein serielles Bussystem mit den Merkmalen von Anspruch 1 gelöst. Die Teilnehmerstation hat eine Kommunikationssteuereinrichtung zum Steuern einer Kommunikation der Teilnehmerstation mit mindestens einer anderen Teilnehmerstation des Bussystems und eine Sende-/Empfangseinrichtung zum Senden eines von der Kommunikationssteuereinrichtung erzeugten Sendesignals als Rahmen auf einen Bus des Bussystems, wobei sich für einen Rahmen, der zwischen Teilnehmerstationen des Bussystems ausgetauscht wird, die Bitzeit eines in der ersten Kommunikationsphase auf den Bus gesendeten Signals unterscheidet von einer Bitzeit eines in der zweiten Kommunikationsphase gesendeten Signals, wobei die Kommunikationssteuereinrichtung ausgestaltet ist, das Sendesignal in einer ersten Betriebsart für einen ersten Rahmen zu erzeugen, der gemäß einem vorgegebenen Kommunikationsprotokoll ausgestaltet ist, mit welchem andere Teilnehmerstationen in dem Bussystem kommunizieren, und wobei die Kommunikationssteuereinrichtung ausgestaltet ist, das Sendesignal in einer zweiten Betriebsart für einen zweiten Rahmen zu erzeugen, der zumindest einem Bit eine andere Funktion zuweist, als sie dem Bit in dem vorgegebenen Kommunikationsprotokoll zugewiesen ist, wie in Anspruch 1 beschrieben.

Aufgrund der Ausgestaltung der Teilnehmerstation ist ein Identifizierer am Anfang des Rahmens um ein Bit erweiterbar, ohne die erste Kommunikationsphase, die bei CAN die Arbitrationsphase ist, zu verlängern und ohne die Kompatibilität mit früheren Versionen des Kommunikationsprotokolls zu beeinträchtigen, das insbesondere CAN FD sein kann.

Dadurch kann der Identifizierer auch bei dem CAN FD Nachfolgeformat so verwendet werden, wie bis jetzt bei CAN üblich. Das heißt, der Identifizierer gibt Auskunft über den Absender, den Inhalt und über die Priorität der Nachricht.

Daher kann mit der Teilnehmerstation der Rahmenidentifizierer verlängert werden und damit mehr Information über den Rahmen darin gespeichert werden, ohne dass Bits hinzugefügt werden müssen und dadurch die Netto-Datenrate sinkt.

Somit kann vom Anwender flexibel entschieden werden, wie viele Informationen über den Inhalt des Rahmens bereits am Anfang des Rahmens mitgeteilt werden sollen. Unabhängig von dem Ergebnis der Entscheidung bzw. der Konfiguration der Kommunikationssteuereinrichtung oder der Umschaltung auf die zweite Betriebsart ist der Rahmen jedoch auch für alle derzeitigen Versionen einer Rahmenspezifikation für das Bussystem kompatibel.

Dadurch wird dem Anwender eine sehr flexible und unaufwändige Möglichkeit an die Hand gegeben, um die Teilnehmerstation und damit auch das Bussystem ohne großen Aufwand an die jeweils vorhandene Anwendung anzupassen.

Als Folge davon kann mit der Teilnehmerstation auch bei Steigerung der Datenrate ein Senden und Empfangen der Rahmen mit großer Flexibilität im Hinblick auf neue Zusatzfunktionen des Bussystems und mit geringer Fehlerquote gewährleistet werden.

Hierbei ist es mit der Teilnehmerstation in dem Bussystem insbesondere möglich, in einer ersten Kommunikationsphase eine von CAN bekannte Arbitration beizubehalten und dennoch die Übertragungsrate gegenüber CAN oder CAN FD nochmals beträchtlich zu steigern.

Das von der Teilnehmerstation durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Teilnehmerstation sind in den abhängigen Ansprüchen angegeben.

Das zumindest eine Bit kann die Bitzeit der ersten Kommunikationsphase haben.

Bei der zuvor beschriebenen Teilnehmerstation hat das zumindest eine Bit in dem ersten Rahmen eine Steuerfunktion und einen in dem vorgegebenen Kommunikationsprotokoll festgelegten festen Wert, wobei das zumindest eine Bit in dem zweiten Rahmen die Funktion des am wenigsten signifikanten Bits eines Identifizierers hat, der in dem zweiten Rahmen direkt nach einem Bit angeordnet ist, das den Start des Rahmens signalisiert, wie in Anspruch 1 beschrieben.

In einer anderen Ausgestaltung ist es möglich, dass der Identifizierer des ersten Rahmens die Priorität der Nachricht angibt, und dass der Identifizierer des zweiten Rahmens Informationen über den Absender, den Inhalt und über die Priorität der Nachricht aufweist.

In einer anderen Ausgestaltung weist das zumindest eine Bit mindestens ein Formatumschalt-Bit auf, welchem für die Umschaltung zwischen der ersten und zweiten Kommunikationsphase in dem Kommunikationsprotokoll vorbestimmte Werte zugewiesen sind.

Denkbar ist, dass das mindestens eine Formatumschalt-Bit das FDF-Bit und/oder das FXF-Bit eines CAN FX Rahmens aufweist.

Die Teilnehmerstation kann zudem einen Protokoll-Erweiterungs-Block aufweisen zur Auswertung des Felds für den Datentyp und des optional vorhandenen zusätzlichen Felds für einen Datentyp in den Nutzdaten und zur Ausführung der erforderlichen Behandlung der Nachricht auf der Grundlage eines Auswerteergebnisses.

Denkbar ist, dass der für die Nachricht gebildete Rahmen kompatibel zu CAN FD aufgebaut ist.

Möglich ist, dass in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 10 gelöst. Das Verfahren wird mit einer Teilnehmerstation des Bussystems ausgeführt, die eine Kommunikationssteuereinrichtung und eine Sende-/Empfangseinrichtung aufweist, wobei das Verfahren die Schritte aufweist, Steuern, mit der Kommunikationssteuereinrichtung einer Kommunikation der Teilnehmerstation mit mindestens einer anderen Teilnehmerstation des Bussystems, und Senden, mit der Sende-/Empfangseinrichtung, eines von der Kommunikationssteuereinrichtung erzeugten Sendesignals als Rahmen auf einen Bus des Bussystems, wobei sich für einen Rahmen, der zwischen Teilnehmerstationen des Bussystems ausgetauscht wird, die Bitzeit eines in der ersten Kommunikationsphase auf den Bus gesendeten Signals unterscheidet von einer Bitzeit eines in der zweiten Kommunikationsphase gesendeten Signals, wobei die Kommunikationssteuereinrichtung das Sendesignal in einer ersten Betriebsart für einen ersten Rahmen erzeugt, der gemäß einem vorgegebenen Kommunikationsprotokoll ausgestaltet ist, mit welchem andere Teilnehmerstationen in dem Bussystem kommunizieren, und wobei die Kommunikationssteuereinrichtung das Sendesignal in einer zweiten Betriebsart für einen zweiten Rahmen erzeugt, der zumindest einem Bit eine andere Funktion zuweist, als sie dem Bit in dem vorgegebenen Kommunikationsprotokoll zugewiesen ist, wie in Anspruch 10 beschrieben.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel in einer ersten Betriebsart gesendet werden kann;
Fig. 3 ein Schaubild zur Veranschaulichung des Aufbaus einer Nachricht, die von einer Teilnehmerstation des Bussystems des ersten Ausführungsbeispiels in einer zweiten Betriebsart gesendet werden kann;
Fig. 4 ein vereinfachtes schematisches Blockschaltbild einer Teilnehmerstation des Bussystems gemäß dem ersten Ausführungsbeispiel;
Fig. 5 einen zeitlichen Verlauf von Bussignalen CAN_H und CAN_L, die bei der Teilnehmerstation gemäß dem ersten Ausführungsbeispiel Bussignale CAN-FX_H und CAN-FX_L sind; und
Fig. 6 einen zeitlichen Verlauf einer Differenzspannung VDIFF der Bussignale CAN-FX_H und CAN-FX_L bei der Teilnehmerstation gemäß dem ersten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

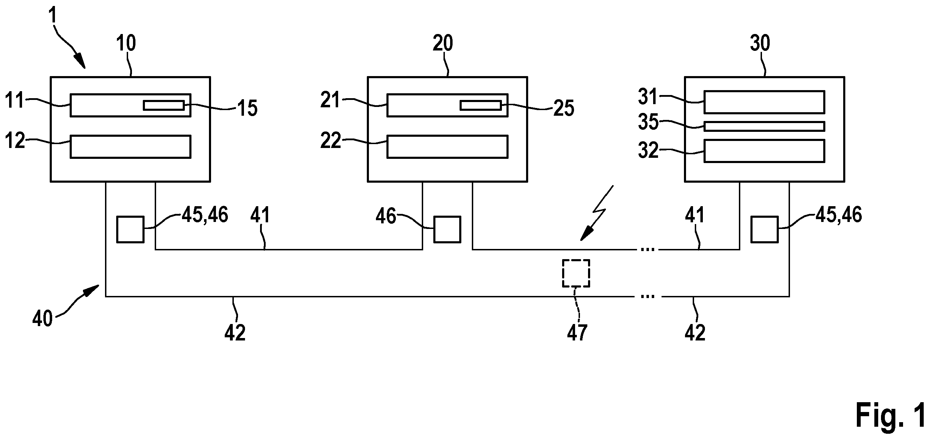

Fig. 1 zeigt als Beispiel ein Bussystem 1, das insbesondere grundlegend für ein CAN-Bussystem, ein CAN FD-Bussystem, ein CAN FX-Bussystem, und/oder Abwandlungen davon ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-FX_H und CAN-FX_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und eine Prüfsummeneinheit 15. Die Teilnehmerstation 20 hat eine Kommunikationssteuereinrichtung 21 eine Sende-/Empfangseinrichtung 22 und eine Prüfsummeneinheit 25. Die Teilnehmerstation 30 hat eine Kommunikationssteuereinrichtung 31, eine Sende-/Empfangseinrichtung 32 und eine Prüfsummeneinheit 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

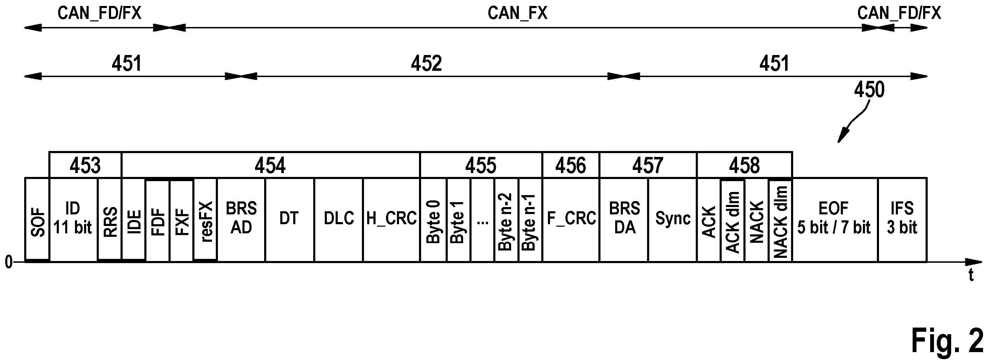

Die Kommunikationssteuereinrichtungen 11, 31 erstellen und lesen erste Nachrichten 45, die beispielsweise modifizierte CAN Nachrichten 45 sind. Hierbei sind die modifizierten CAN Nachrichten 45 auf der Grundlage eines CAN FX-Formats aufgebaut, das in Bezug auf Fig. 2 detaillierter beschrieben ist, und bei welchem die jeweilige Prüfsummeneinheit 15, 35 zum Einsatz kommt. Die Kommunikationssteuereinrichtungen 11, 31 können zudem ausgeführt sein, um je nach Bedarf eine CAN FX-Nachricht 45 oder eine CAN FD-Nachricht 46 für die Sende-/Empfangseinrichtungen 12, 32 bereitzustellen oder von dieser zu empfangen. Auch hierbei kommen die jeweiligen Prüfsummeneinheiten 15, 35 zum Einsatz. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN FX oder CAN FD.

Die Kommunikationssteuereinrichtung 21 kann wie ein herkömmlicher CAN-Controller nach ISO 11898-1:2015 ausgeführt sein, d.h. wie ein CAN FD toleranter Classical CAN CAN-Controller oder ein CAN FD Controller. Die Kommunikationssteuereinrichtung 21 erstellt und liest zweite Nachrichten 46, beispielsweise CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachricht übertragen werden. Insbesondere ist die Kommunikationssteuereinrichtung 21 wie ein herkömmlicher CAN FD-Controller ausgeführt.

Die Sende-/Empfangseinrichtung 22 kann wie ein herkömmlicher CAN Transceiver nach ISO 11898-1:2015 oder CAN FD Transceiver ausgeführt sein. Die Sende-/Empfangseinrichtungen 12, 32 können ausgeführt sein, um je nach Bedarf Nachrichten 45 gemäß dem CAN FX-Format oder Nachrichten 46 gemäß dem derzeitigen CAN FD-Format für die zugehörige Kommunikationssteuereinrichtung 11, 31 bereitzustellen oder von dieser zu empfangen.

Mit den beiden Teilnehmerstationen 10, 30 ist eine Bildung und dann Übertragung von Nachrichten 45 mit dem CAN FX Format sowie der Empfang solcher Nachrichten 45 realisierbar.

Fig. 2 zeigt für die Nachricht 45 einen CAN FX Rahmen 450, wie er von der Kommunikationssteuereinrichtung 11 in einer ersten Betriebsart für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD, wie auch in Fig. 2 veranschaulicht. Dasselbe gilt analog für die Kommunikationssteuereinrichtung 31 und die Sende-/Empfangseinrichtung 32 der Teilnehmerstation 30.

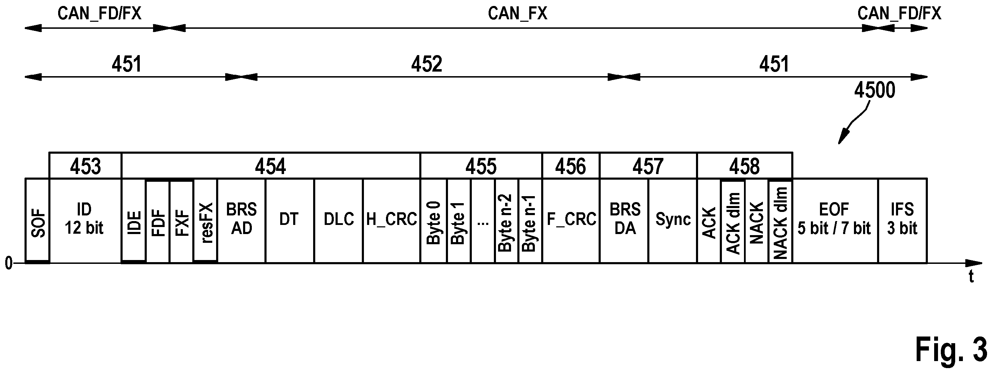

Fig. 3 zeigt für die Nachricht 45 einen Rahmen 4500, auf welchen alternativ zu dem in Fig. 2 gezeigten Rahmen 450 umgeschaltet werden kann. Somit kann die Kommunikationssteuereinrichtung 11 in einer zweiten Betriebsart den Rahmen 4500 für die Sende-/Empfangseinrichtung 12 zum Senden auf den Bus 40 bereitstellen. Im Unterschied zu dem Rahmen 450, der einen Identifizierer (Identifier) mit 11 Bit verwendet, hat der Rahmen 4500 ein CAN FX Erweitertes Rahmenformat, bei dem ein Identifizierer (Identifier) mit 12 Bit verwendet wird.

Beide Rahmen 450, 4500 gemäß Fig. 2 und Fig. 3 sind bis zum elften Bit des Identifizierers (ID) identisch. Jedoch verwendet die Kommunikationssteuereinrichtung 11 in der zweiten Betriebsart das RRS-Bit des Rahmens 450 als zwölftes Identifizierer-Bit. Dadurch kann der Identifizierer des Rahmens 4500 Informationen zu Sender bzw. Absender, Inhalt und Priorität des Rahmens 4500 bzw. der Nachricht 45 aufweisen. In dem Identifizierer des Rahmens 450 können dagegen nur Informationen zur Priorität des Rahmens 450 bzw. der Nachricht 45. Gegebenenfalls kann die Priorität des Rahmens 450 auch verwendet werden, um auf den Sender bzw. Absender des Rahmens 450 bzw. der Nachricht 45 zu schließen. Ansonsten sind beide Rahmen 450, 4500 identisch aufgebaut.

Die Kompatibilität der Rahmen 450, 4500 zu CAN FD ist gegeben, da in dem Rahmen 4500 das RRS-Bit umgewidmet ist zum am wenigsten signifikanten Bit LSB (least significant bit) des 12-Bit Identifizierers. Nach Umschaltung auf das Format des Rahmens 4500, also nach Umschaltung in die zweite Betriebsart, sind dann aus Sicht der CAN FX Teilnehmerstationen 10, 30 die ersten 12 Bits, die auf das SOF-Bit folgen, Identifizierer-Bits. Das SOF-Bit signalisiert den Start der Rahmen 450, 4500.

Gemäß Fig. 2 und Fig. 3 sind die CAN FX-Rahmen 450, 4500 für die CAN-Kommunikation auf dem Bus 40 in unterschiedliche Kommunikationsphasen 451, 452 unterteilt, nämlich eine Arbitrationsphase 451 und eine Datenphase 452. Der Rahmen 450 hat ein Arbitrationsfeld 453, ein Steuerfeld 454, ein Datenfeld 455, ein Prüfsummenfeld 456 für eine Prüfsumme F_CRC, ein Synchronisationsfeld 457 und ein Bestätigungsfeld 458.

In der Arbitrationsphase 451 wird bei den beiden Rahmen 450, 4500 mit Hilfe des Identifizierers (ID) in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt.

Die Rahmen 4500 arbitrieren mit ihren 12-Bit Identifiziern linksbündig gegen den 11-Bit-Identifizierer plus das dominante RRS-Bit der Rahmen 450 oder gegen CAN FD Rahmen um den nächsten exklusiven, kollisionsfreien Zugriff auf den Bus 40.

Das IDE-Bit wird auch bei den Rahmen 4500 nicht als rezessives Identifizierer-Bit verwendet, weil ein es rezessiv gesendetes IDE-Bit im CAN FD Format auf eine 29-Bit Identifier umschaltet. Daher wird das IDE-Bit dominant gesendet.

In der Arbitrationsphase 451 der Rahmen 450, 4500 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-FX-Rahmens bzw. der Nachricht 45 aus dem Datenfeld 455 sowie das Prüfsummenfeld 456 für die Prüfsumme F_CRC gesendet.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN FX im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate, insbesondere auf etwa 10 Megabit pro Sekunde,
c) Anheben der Größe der Nutzdaten pro Rahmen, insbesondere auf etwa 4kbyte.

Wie in Fig. 2 und Fig. 3 dargestellt, verwendet die Teilnehmerstation 10 in den beiden Betriebsarten zur Erstellung der Rahmen 450, 4500 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Dagegen verwendet die Teilnehmerstation 10 ab dem FDF-Bit in der ersten Kommunikationsphase sowie in der zweiten Kommunikationsphase, der Datenphase 452, ein CAN FX Format, das nachfolgend beschrieben ist.

Bei dem vorliegenden Ausführungsbeispiel sind CAN FX und CAN FD kompatibel. Hierbei wird das von CAN FD bekannte res-Bit, das nachfolgend FXF-Bit genannt ist, für die Umschaltung von dem CAN FD Format zu dem CAN FX Format genutzt. Daher sind die Rahmenformate von CAN FD und CAN FX bis zum res-Bit gleich. Eine CAN FX Teilnehmerstation, also hier die Teilnehmerstationen 10, 30, unterstützt auch CAN FD.

Gemäß Fig. 2 ist der Rahmen 450 vom SOF-Bit bis einschließlich zum FDF-Bit identisch zum CAN FD Base Frame Format gemäß der ISO11898-1:2015. Daher wird der bekannte Aufbau hier nicht weiter erläutert. Der Rahmen 4500 gemäß Fig. 3 unterscheidet sich nur in der Funktion des RRS-Bits, wie zuvor beschrieben. Bei den Rahmen 450, 4500 gilt, dass Bits, die an ihrer unteren Linie in Fig. 2, Fig. 3 mit einem dicken Strich dargestellt sind, werden in den Rahmen 450, 4500 als dominant gesendet. Außerdem gilt bei den Rahmen 450, 4500, dass Bits, die an ihrer oberen Linie in Fig. 2, Fig. 3 mit einem dicken Strich dargestellt sind, in den Rahmen 450, 4500 als rezessiv gesendet werden.

Allgemein werden bei der Erzeugung der Rahmen 450, 4500 zwei unterschiedliche Stuffing-Regeln angewendet. Bis zum FXF-Bit im Steuerfeld 454 gilt die dynamische Bit-Stuffing-Regel von CAN FD, so dass nach 5 gleichen Bits in Folge ein inverses Stuff-Bit einzufügen ist. Nach einem FX-Bit im Steuerfeld 454 gilt eine feste Stuffing-Regel, so dass nach einer festen Zahl von Bits ein fixed Stuff-Bit einzufügen ist. Alternativ können statt nur einem Stuff-Bit eine Anzahl von 2 oder mehr Bits als fixed Stuff-Bits eingefügt werden.

In den Rahmen 450, 4500 folgt direkt nach dem FDF-Bit das FXF-Bit, das von der Position her dem "res Bit" im CAN FD Base Frame Format entspricht, wie zuvor erwähnt. Wird das FXF-Bit als 1, also rezessiv, gesendet, identifiziert es damit den Rahmen 450, 4500 als CAN FX-Rahmen. Für einen CAN FD Rahmen setzt die Kommunikationssteuereinrichtung 11 das FXF-Bit als 0, also dominant.

Nach dem FXF-Bit folgt in den Rahmen 450, 4500 ein resFX-Bit, das ein dominantes Bit für die zukünftige Nutzung ist. Das resFX muss für die Rahmen 450, 4500 als 0, also dominant, gesendet werden. Empfängt die Teilnehmerstation 10 jedoch ein resFX-Bit als 1, also rezessiv, geht die empfangende Teilnehmerstation 10 beispielsweise in einen Protokollausnahmezustand (Protocoll Exception State), so wie es bei einer CAN FD Nachricht 46 für ein res=1 ausgeführt wird. Das resFX-Bit könnte auch genau umgekehrt definiert sein, also, dass es als 1, also rezessiv, gesendet werden muss, so dass die empfangende Teilnehmerstation bei einem dominanten resFX-Bit in den Protokollausnahmezustand geht.

Nach dem resFXF-Bit folgt in den Rahmen 450, 4500 eine Sequenz BRS AD, in welcher eine vorbestimmte Bitsequenz codiert wird. Diese Bitsequenz erlaubt eine einfache und sichere Umschaltung von der Arbitrations-Bitrate der Arbitrationsphase 451 zu der Daten-Bitrate der Datenphase 452. Beispielsweise besteht die Bitsequenz der BRS AD aus einem rezessiven Arbitrations-Bit gefolgt von einem dominanten Daten-Bit. Bei diesem Beispiel kann die Bitrate an der Flanke zwischen den zwei genannten Bits umgeschaltet werden.

Nach der Sequenz BRS AD folgt in den Rahmen 450, 4500 ein DT-Feld, in welchem der Datentyp (Data Type = DT) der Nutzdaten des Datenfelds 455 angegeben ist, das nachfolgend noch genauer beschrieben ist. Das DT-Feld hat eine Länge von beispielsweise 1 Byte; damit lassen sich 2⁸ = 256 verschiedene Datentypen (Data Types) definieren. Selbstverständlich ist eine andere Länge für das DT-Feld wählbar. Der Datentyp (Data Type) kennzeichnet den Inhalt des Datenfeldes 455 im Hinblick darauf, welche Art von Information im Datenfeld 455 enthalten ist. Je nach Wert im DT-Feld werden im Datenfeld 455 auch noch zusätzliche Header oder Trailer übertragen, die neben den eigentlichen Nutzdaten (User Data) vorgesehen sind. Alternativ ist das DT-Feld am Anfang des Datenfeldes 455, also z.B. im ersten Byte des Datenfeldes 455 angeordnet. Mit dem DT-Feld lassen sich Zusatzfunktionen realisieren, wie Safety (Funktionale Sicherheit), Security (Daten Sicherheit) und QoS (Quality of Service, Dienstgüte, wie beispielsweise Garantie einer maximalen Latenz für einen Rahmen, Zeitsynchronisation der Teilnehmerstationen (Knoten) in dem Bussystem, usw. Hierdurch ist das Kommunikationsprotokoll modular und damit für die Zukunft einfach erweiterbar, um zusätzliche Funktionen einzufügen, und zwar ohne das Rahmenformat ändern zu müssen. Neue Zusatzfunktionen können in alten Implementierungen mittels Software hinzugefügt werden, so dass die verschiedenen Implementierungen kompatibel bleiben. Somit wird das für das Bussystem verwendete Kommunikationsprotokoll auch sehr flexibel erweiterbar.

Nach dem DT-Feld folgt in den Rahmen 450, 4500 ein DLC-Feld, in welchem der Datenlängencode (DLC = Data Length Code) eingefügt wird, welcher die Anzahl der Bytes im Datenfeld 455 der Rahmen 450, 4500 angibt. Der Datenlängencode (DLC) kann jeden Wert von 1 bis zur maximalen Länge des Datenfelds 455 bzw. Datenfeldlänge annehmen. Beträgt die maximale Datenfeldlänge insbesondere 2048 Bit, benötigt der Datenlängencode (DLC) eine Anzahl von 11 Bits unter den Annahmen, dass DLC = 0 eine Datenfeldlänge mit einer Anzahl von 1 Byte bedeutet und DLC = 2047 eine Datenfeldlänge mit einer Anzahl von 2048 Byte Datenfeldlänge bedeutet. Alternativ könnte ein Datenfeld 455 der Länge 0 erlaubt sein, wie beispielsweise bei CAN. Hierbei würde DLC = 0 beispielsweise die Datenfeldlänge mit der Anzahl von 0 Bytes codieren. Die maximale codierbare Datenfeldlänge ist mit beispielsweise 11 Bit dann (2^11)-1 = 2047.

Nach dem DLC-Feld folgt in den Rahmen 450, 4500 eine Kopfprüfsumme H_CRC. Die Kopfprüfsumme ist eine Prüfsumme zur Absicherung des Kopfes (Headers) des Rahmens 450, das heißt aller Bits vom Beginn der Rahmen 450, 4500 mit dem SOF-Bit bis zum Beginn der Kopfprüfsumme H_CRC, inklusive aller dynamischen und optional der fixed Stuff-Bits bis zum Beginn der Kopfprüfsumme H_CRC. Die Länge der Kopfprüfsumme H_CRC und damit des Prüfsummen-Polynoms gemäß der zyklischen Redundanzprüfung (CRC) ist entsprechend der gewünschten Hamming-Distanz zu wählen. Das von der Kopfprüfsumme H_CRC abzusichernde Datenwort ist bei einem Datenlängencode (DLC) von 11 Bit länger als 27 Bit. Daher muss das Polynom der Kopfprüfsumme H_CRC, um eine Hamming-Distanz von 6 zu erreichen, mindestens 13 Bit lang sein. Die Berechnung der Kopfprüfsumme H_CRC wird nachfolgend noch genauer beschrieben.

Nach der Kopfprüfsumme H_CRC folgt in den Rahmen 450, 4500 das Datenfeld 455 (Data Field). Das Datenfeld 455 besteht aus 1 bis n Daten-Bytes, wobei n beispielsweise 2048 Byte oder 4096 Byte oder ein beliebiger anderer Wert ist. Alternativ ist eine Datenfeldlänge von 0 denkbar. Die Länge des Datenfelds 455 ist in dem DLC-Feld codiert, wie zuvor beschrieben. Wie zuvor beschrieben, ist optional das DT-Feld am Anfang des Datenfeldes 455, also z.B. im ersten Byte des Datenfeldes 455 angeordnet.

Nach dem Datenfeld 455 folgt in den Rahmen 450, 4500 eine Rahmenprüfsumme F_CRC. Die Rahmenprüfsumme F_CRC besteht aus den Bits der Rahmenprüfsumme F_CRC. Die Länge der Rahmenprüfsumme F_CRC und damit des CRC Polynoms ist entsprechend der gewünschten Hamming-Distanz zu wählen. Die Rahmenprüfsumme F_CRC sichert die gesamten Rahmen 450, 4500 ab. Alternativ ist optional nur das Datenfeld 455 mit der Rahmenprüfsumme F_CRC abgesichert.

Nach der Rahmenprüfsumme F_CRC folgt in den Rahmen 450, 4500 eine Sequenz BRS DA, in welcher eine vorbestimmte Bitsequenz codiert wird. Diese Bitsequenz erlaubt eine einfache und sichere Umschaltung von der Daten-Bitrate der Datenphase 452 zu der Arbitrations-Bitrate der Arbitrationsphase 451. Beispielsweise besteht die Bitsequenz der BRS DA aus einem rezessiven Daten-Bit, gefolgt von einem dominanten Arbitrations-Bit. Bei diesem Beispiel kann an der Flanke zwischen den zwei genannten Bits die Bitrate umgeschaltet werden.

Nach der Sequenz BRS DA folgt in den Rahmen 450, 4500 ein Sync-Feld, in dem ein Synchronisationsmuster (Sync Pattern) vorgehalten ist. Das Synchronisationsmuster ist ein Bitmuster, das einer empfangenden Teilnehmerstation 10, 30 erlaubt, den Beginn der Arbitrationsphase 451 nach der Datenphase 452 zu erkennen. Das Synchronisationsmuster erlaubt empfangenden Teilnehmerstationen 10, 30, die beispielsweise aufgrund einer falschen Kopfprüfsumme H_CRC die korrekte Länge des Datenfelds 455 nicht kennen, sich aufzusynchronisieren. Anschließend können diese Teilnehmerstationen ein "Negativ Acknowledge" senden, um den fehlerhaften Empfang mitzuteilen. Dies ist insbesondere dann sehr wichtig, wenn CAN FX im Datenfeld 455 keine Fehlerrahmen 47 (Error Flags) mehr erlaubt.

Nach dem Sync-Feld folgt in den Rahmen 450, 4500 ein Bestätigungsfeld (ACK Field), das aus mehreren Bits besteht, nämlich bei dem Beispiel von Fig. 2 einem ACK-Bit, einem ACK-dlm-Bit, einem NACK-Bit und einem NACK-dlm-Bit Bit. Das NACK-Bit und das NACK-dlm-Bit sind optionale Bits. Das ACK-Bit senden die empfangenden Teilnehmerstation 10, 30 als dominant, wenn sie einen der Rahmen 450, 4500 korrekt empfangen haben. Die sendende Teilnehmerstation sendet das ACK-Bit als rezessiv. Daher kann das ursprünglich in den Rahmen 450, 4500 auf den Bus 40 gesendete Bit von den empfangenden Teilnehmerstationen 10, 30 überschrieben werden. Das ACK-dlm-Bit wird als ein rezessives Bit gesendet, welches zur Abtrennung zu anderen Feldern dient. Das NACK-Bit und das NACK-dlm Bit dienen dazu, dass eine empfangende Teilnehmerstation einen nicht korrekten Empfang des Rahmens 450, 4500 auf dem Bus 40 signalisieren kann. Die Funktion der Bits ist wie die des ACK-Bits und des ACK-dlm-Bits.

Nach dem Bestätigungsfeld (ACK Field) folgt in den Rahmen 450, 4500 ein Endefeld (EOF = End of Frame). Die Bitsequenz des Endefelds (EOF) dient dazu, das Ende der Rahmen 450, 4500 zu kennzeichnen. Das Endefeld (EOF) sorgt dafür, dass am Ende der Rahmen 450, 4500 eine Anzahl von 8 rezessiven Bits gesendet wird. Das ist eine Bitfolge, die innerhalb der Rahmen 450, 4500 nicht auftreten kann. Dadurch kann von den Teilnehmerstationen 10, 20, 30 das Ende der Rahmen 450, 4500 sicher erkannt werden.

Das Endefeld (EOF) hat eine Länge, die abhängig davon unterschiedlich ist, ob im NACK-Bit ein dominantes Bit oder ein rezessives Bit gesehen wurde. Wenn die sendende Teilnehmerstation das NACK-Bit als dominant empfangen hat, dann hat das Endefeld (EOF) eine Anzahl von 7 rezessiven Bits. Ansonsten ist das Endefeld (EOF) nur 5 rezessive Bits lang.

Nach dem Endefeld (EOF) folgt in den Rahmen 450, 4500 ein Zwischenrahmenabstand (IFS - Inter Frame Space). Dieser Zwischenrahmenabstand (IFS) ist ausgestaltet wie bei CAN FD entsprechend der ISO11898-1:2015.

Fig. 2 und Fig. 3 geben ein spezielles Beispiel für die Reihenfolge der Unterteilungen des Headers für die Rahmen 450, 4500 an. Alternativ ist die Reihenfolge der Unterteilungen des Headers anders sortierbar. Zum Beispiel kann das DLC-Feld vor dem DT-Feld angeordnet sein.

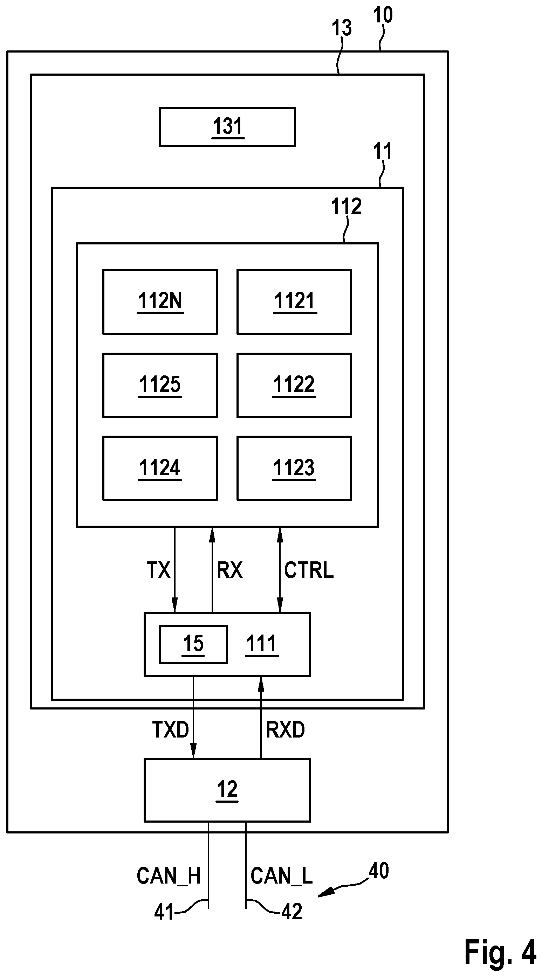

Fig. 4 zeigt den grundlegenden Aufbau der Teilnehmerstation 10 mit der Kommunikationssteuereinrichtung 11, der Sende-/Empfangseinrichtung 12 und der Prüfsummeneinheit 15, die Teil der Kommunikationssteuereinrichtung 11, genauer gesagt ihres Protokoll-Controllers 111 ist. Zudem hat die Kommunikationssteuereinrichtung 11 einen Protokoll-Erweiterungs-Block 112, mit mindestens einem jedoch insbesondere einer Vielzahl von Erweiterungsmodulen 1121 bis 112N, wie beispielsweise ein Nachrichtenverwaltungsmodul 1121, ein Zeitsynchronisationsmodul 1122, ein CANsec-Modul 1123, ein Empfangssignalfiltermodul 1124, ein Sendesignalfiltermodul 1125, usw. Es sind beliebig viele die Module oder andere Module vorsehbar und einsetzbar.

Die Teilnehmerstation 30 ist in ähnlicher Weise aufgebaut, wie in Fig. 4 gezeigt, jedoch ist die Prüfsummeneinheit 35 gemäß Fig. 1 separat von der Kommunikationssteuereinrichtung 31 und der Sende-/Empfangseinrichtung 32 angeordnet. Daher wird die Teilnehmerstation 30 nicht separat beschrieben.

Gemäß Fig. 4 hat die Teilnehmerstation 10 zusätzlich zu der Kommunikationssteuereinrichtung 11 und der Sende-/Empfangseinrichtung 12 einen Mikrocontroller 13, welchem die Kommunikationssteuereinrichtung 11 zugeordnet ist und der eine zentrale Verarbeitungseinheit (Central Processing Unit = CPU) 131 aufweist. Zusätzlich ist üblicherweise eine nicht dargestellte Energieversorgungseinrichtung eingebaut, welche die Sende-/Empfangseinrichtung 12 mit elektrischer Energie versorgt. Die Energieversorgungseinrichtung liefert üblicherweise eine Spannung CAN_Supply von 5 V. Je nach Bedarf kann die Energieversorgungseinrichtung jedoch eine andere Spannung mit einem anderen Wert liefern. Zusätzlich oder alternativ kann die Energieversorgungseinrichtung als Stromquelle ausgestaltet sein.

Die Kommunikationssteuereinrichtung 11 ist für die Implementierung der CAN FX-Funktionen in der ersten oder zweiten Betriebsart zuständig, die zuvor in Bezug auf die Rahmen 450, 4500 von Fig. 2 und Fig. 3 erläutert.

In dem Protokoll-Erweiterungs-Block 112 sind alle höherwertigen Protokoll-Erweiterungsfunktionen zusammengefasst. Der Protokoll-Erweiterungs-Block 112 dient zur Auswertung des DT-Felds, also des darin enthaltenen Datentyps, und des optional vorhandenen zusätzlichen Felds für einen Datentyp in den Nutzdaten und zur Ausführung der erforderlichen Behandlung der Nachricht auf der Grundlage eines Auswerteergebnisses. Hierbei kann der Protokoll-Erweiterungs-Block 112 mindestens ein Modul 1121 bis 112N aufweisen, welches die Auswertung und die Ausführung der erforderlichen Behandlung der Nachricht ausführt. Alternativ oder zusätzlich sind/ist die Auswertung und/oder die Ausführung der erforderlichen Behandlung der Nachricht mittels Hardware ausführbar. Alternativ oder zusätzlich sind/ist die Auswertung und/oder die Ausführung der erforderlichen Behandlung der Nachricht mittels Software ausführbar, die auf dem Mikrocontroller 13 der Teilnehmerstation 10 abläuft.

Die Funktionen können modular, also von den einzelnen Modulen 1121 bis 112N implementiert werden. Die Protokollerweiterungen bzw. Protokoll-Erweiterungsfunktionen (Protocol Extensions) können somit leicht ergänzt werden und haben keine Rückwirkung auf den Protokoll-Controller 111. Die Protokollerweiterungen können prinzipiell alternativ oder zusätzlich in Software implementiert werden, die dann auf der zentralen Verarbeitungseinheit 131 des Mikrocontrollers 13 ausgeführt wird. Zwischen dem Protokoll-Controller 111 und dem Protokoll-Erweiterungs-Block 112 ist ein Signal CRTL austauschbar, mit welchem das Senden und Empfangen gesteuert werden kann.

Beispielsweise speichert das Nachrichtenverwaltungsmodul 1121 (Message Handler) eine begrenzte Anzahl zu sendender und empfangener Nachrichten 45. Der notwendige Speicher, in dem die Nachrichten 45 abgelegt werden, kann alternativ außerhalb der Kommunikationssteuereinrichtung 11 angeordnet sein, wobei die Zustandsinformationen, also z.B. ob eine Nachricht 45 gespeichert ist, im Nachrichtenverwaltungsmodul 1121 gespeichert ist. Gegebenenfalls kann das Nachrichtenverwaltungsmodul 1121 auch Nachrichten 45 aufgeteilt auf mehrere kleinere Rahmen 450, 4500 senden und Nachrichten 45 aufgeteilt auf mehrere kleinere Rahmen 450, 4500 empfangen - d.h. die Teile der Nachricht 45 einer Nachricht zuordnen.

Beispielsweise führt das Zeitsynchronisationsmodul 1122 (TimeSync) die Zeitsynchronisation autark durch und sendet und empfängt dazu CAN FX Nachrichten 45. Die Informationen stellt das Zeitsynchronisationsmodul 1122 der zentralen Verarbeitungseinheit 131 bereit.

Beispielsweise sichert das CANsec-Modul 1123 bei Bedarf Nachrichten 45 mit kryptographischen Methoden ab.

Beispielsweise kann das Empfangssignalfiltermodul 1124 eingehende Nachrichten 45 filtern, um die zentrale Verarbeitungseinheit 131 zu entlasten.

Beispielsweise kann das Sendesignalfiltermodul 1125 den einzelnen Nachrichten 45 eine Priorität-ID (ID zur Arbitration) zuteilen und diese dynamisch anpassen. Hierbei kann das Sendesignalfiltermodul 1125 auch die Umschaltung zwischen den beiden Betriebsarten zum Wechsel zwischen den Rahmen 450, 4500 von Fig. 2 und Fig. 3 realisieren. Zudem kann das Sendesignalfiltermodul 1125 optional dafür sorgen, dass eine zu sendende Nachricht 45 vom CANsec-Modul kryptographisch abgesichert wird, bevor die Nachricht dann verschlüsselt gesendet wird.

Die Prüfsummeneinheit 15 berechnet die zuvor beschriebene Rahmenprüfsumme F_CRC und die zuvor beschriebene Kopfprüfsumme H_CRC.

Die Sende-/Empfangseinrichtung 12 hat einen nicht dargestellten Sender und einen Empfänger. Auch wenn nachfolgend immer von der Sende-/Empfangseinrichtung 12 gesprochen ist, ist es alternativ möglich, den Empfänger in einer separaten Einrichtung extern von dem Sender vorzusehen. Der Sender und der Empfänger können wie bei einer herkömmlichen Sende-/Empfangseinrichtung 22 aufgebaut sein.

Die Sende-/Empfangseinrichtung 12 ist an den Bus 40 angeschlossen, genauer gesagt dessen erste Busader 41 für CAN_H oder CAN-FX_H und dessen zweite Busader 42 für CAN_L oder CAN-FX_L.

Im Betrieb des Bussystems 1 setzt der Sender der Sende-/Empfangseinrichtung 12 ein Sendesignal TXD der Kommunikationssteuereinrichtung 11 in entsprechende Signale CAN-FX_H und CAN-FX_L für die Busadern 41, 42 um und sendet diese Signale CAN-FX_H und CAN-FX_L an den Anschlüssen für CAN_H und CAN_L auf den Bus 40. Die Sende-/Empfangseinrichtung 12 implementiert die Schicht 1 des bekannten OSI-Modells, das heißt die Sende-/Empfangseinrichtung 12 codiert die einzelnen zu sendenden Bits physikalisch auf dem Bus 40, beispielsweise als eine Differenzspannung VDIFF = CAN-FX_H - CAN-FX_L.

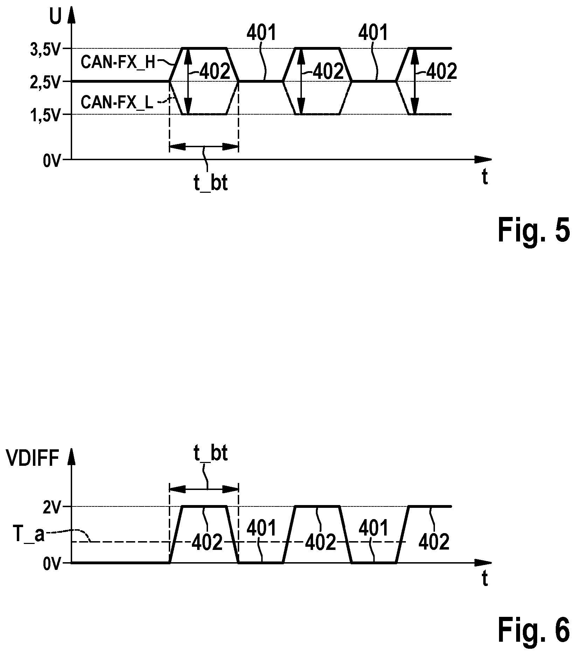

Der Empfänger der Sende-/Empfangseinrichtung 12 bildet aus von Bus 40 empfangenen Signalen CAN-FX_H und CAN-FX_L gemäß Fig. 5 ein Empfangssignal RXD und gibt dieses an die Kommunikationssteuereinrichtung 11 weiter, wie in Fig. 4 gezeigt. Mit Ausnahme eines Leerlauf- oder Bereitschaftszustands (Idle oder Standby), hört die Sende-/Empfangseinrichtung 12 mit dem Empfänger im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45 ist oder nicht.

Gemäß dem Beispiel von Fig. 5 haben die Signale CAN-FX_H und CAN-FX_L zumindest in der Arbitrationsphase 451 die dominanten und rezessiven Buspegel 401, 402, wie von CAN bekannt. Auf dem Bus 40 bildet sich ein Differenzsignal VDIFF = CAN-FX_H - CAN-FX_L aus, das in Fig. 6 gezeigt ist. Die einzelnen Bits des Signals VDIFF mit der Bitzeit t_bt können mit einer Empfangsschelle von 0,7 V erkannt werden. In der Datenphase 452 werden die Bits der Signale CAN-FX_H und CAN-FX_L schneller, also mit einer kürzeren Bitzeit t_bt, gesendet als in der Arbitrationsphase 451. Somit unterscheiden sich die Signale CAN-FX_H und CAN-FX_L in der Datenphase 452 zumindest in deren höheren Bitrate von den herkömmlichen Signalen CAN_H und CAN_L.

Die Abfolge der Zustände 401, 402 für die Signale CAN-FX_H, CAN-FX_L in Fig. 4 und der daraus resultierende Verlauf der Spannung VDIFF von Fig. 6 dient nur der Veranschaulichung der Funktion der Teilnehmerstation 10. Die Abfolge der Datenzustände für die Buszustände 401, 402 ist je nach Bedarf wählbar.

Mit anderen Worten erzeugt der Sender der Sende-/Empfangseinrichtung 12 in einer ersten Betriebsart gemäß Fig. 4 einen ersten Datenzustand als Buszustand 402 mit unterschiedlichen Buspegeln für zwei Busadern 41, 42 der Busleitung und einen zweiten Datenzustand als Buszustand 401 mit demselben Buspegel für die zwei Busadern 41, 42 der Busleitung des Busses 40.

Außerdem sendet der Sender der Sende-/Empfangseinrichtung 12, für die zeitlichen Verläufe der Signale CAN-FX_H, CAN-FX_L in einer zweiten Betriebsart, welche die Datenphase 452 umfasst, die Bits mit einer höheren Bitrate auf den Bus 40. Die CAN-FX_H und CAN-FX_L Signale können in der Datenphase 452 zudem mit einem anderen Physical Layer als bei CAN FD erzeugt werden. Dadurch kann die Bitrate in der Datenphase 452 noch weiter erhöht werden als bei CAN FD.

Gemäß einem zweiten Ausführungsbeispiel erwartet die Teilnehmerstation 10 als Sender in einer ersten Betriebsart einen der Rahmen 450, 4500 derart, dass das FDF-Bit vom Bus 40 empfangen wird, wie es vom Sender gesendet wurde. Andernfalls wertet die Teilnehmerstation 10 dies als Format-Fehler und bricht das Senden des derzeit zu sendenden Rahmens 450, 4500 ab.

Zudem kann die Teilnehmerstation 10 derart konfiguriert werden, dass die Teilnehmerstation 10 in eine zweite Betriebsart umschaltbar ist, in welcher das Arbitrationsverhalten bei der Formatumschaltung im Vergleich zu der ersten Betriebsart geändert ist. Somit wird in der zweiten Betriebsart von der Teilnehmerstation 10 als Sender die Arbitration weiter fortgesetzt bis zum FDF Bit, wie zuvor für den Rahmen 4500 beschrieben. Das FDF Bit wird in CAN FD Rahmen und in CAN FX Rahmen rezessiv gesendet. In Classical CAN Rahmen wird das FDF-Bit dominant gesendet.

Daher wird ein Sender, der einen der Rahmen 450 senden will und der deshalb das FDF Bit rezessiv gesendet hat, jedoch stattdessen ein dominantes Bit auf dem Bus 40 sieht, die Arbitration verloren geben. In Folge dessen wird der Sender zum Empfänger eines Classical CAN Rahmens. Diese Option wird "FDF-Arbitration" genannt.

Der Vorteil dieser Variante liegt darin, dass in einem Fall, bei dem zwei Sender in einer Arbitrationsphase gleichzeitig versuchen, je einen Classical CAN Rahmen und einen CAN FX Rahmen oder einen CAN FD Rahmen und einen CAN FX Rahmen mit dem jeweils gleichen 11-Bit Identifizierer zu senden, keiner der beiden Rahmen durch einen Fehlerrahmen 47 zerstört wird. Dies ist besonders hilfreich in der Übergangsphase bei der graduellen Einführung von CAN FX in gemischte Bussysteme 1, die CAN FX-Teilnehmerstationen 10, 30 und CAN FD-Teilnehmerstationen 20 aufweisen, wie in Fig. 1 gezeigt. Alle Teilnehmerstationen 10, 20, 30 dürfen dann die gleichen Identifizierer verwenden.

Das führt zu den folgenden Eigenschaften. Zum einen dürfen Classical CAN, CAN FD, und CAN FX Rahmen die gleichen Identifizierer verwenden. Zum anderen erfolgt die Arbitration auch während der Formatumschaltung, die in dem FDF-Bit stattfindet. Somit ergibt sich, dass bei gleichen Identifizierern die Priorität der Rahmen wie folgt ist. Ein Classical CAN Rahmen hat eine höhere Priorität als ein CAN FD oder CAN FX Rahmen. Ein CAN FD Rahmen hat eine höhere Priorität als ein CAN FX Rahmen.

Gemäß einem dritten Ausführungsbeispiel erwartet die Teilnehmerstation 10 als Sender in einer ersten Betriebsart einen der Rahmen 450, 4500 derart, dass das FXF-Bit vom Bus 40 empfangen wird, wie es vom Sender gesendet wurde. Andernfalls wertet die Teilnehmerstation 10 dies als Format-Fehler und bricht das Senden des derzeit zu sendenden Rahmens 450, 4500 ab.

Zudem kann die Teilnehmerstation 10 derart konfiguriert werden, dass die Teilnehmerstation 10 in eine zweite Betriebsart umschaltbar ist, in welcher das Arbitrationsverhalten bei der Formatumschaltung im Vergleich zu der ersten Betriebsart geändert ist. Somit wird in der zweiten Betriebsart von der Teilnehmerstation 10 als Sender die Arbitration weiter fortgesetzt bis zum FXF Bit. Das FXF Bit wird in CAN FX Rahmen rezessiv gesendet. In CAN FD Rahmen, wie den Rahmen 450, 4500, wird das FXF-Bit dominant gesendet. Somit erfolgt die Arbitration auch während der Formatumschaltung, die in dem FXF-Bit stattfindet.

Daher wird ein Sender, der einen der Rahmen 450, 4500 senden will und der deshalb das FXF-Bit rezessiv gesendet hat, jedoch stattdessen ein dominantes Bit auf dem Bus 40 sieht, die Arbitration verloren geben. In Folge dessen wird der Sender zum Empfänger eines CAN FD Rahmens. Diese Option wird "FXF-Arbitration" genannt.

Auch diese Variante hat denselben Vorteil und dieselben Eigenschaften, wie bei dem zweiten Ausführungsbeispiel genannt. Somit können auch bei dem vorliegenden Ausführungsbeispiel alle Teilnehmerstationen 10, 20, 30 die gleichen Identifizierer verwenden. Insbesondere sind für Classical CAN, CAN FD, und CAN FX Rahmen die gleichen Identifizierer verwendbar. Hierbei können bei dem vorliegenden Ausführungsbeispiel die Identifizierer mehrfach verwendet werden. Das erhöht die Zahl der praktisch vorhandenen Identifizierer um den Faktor 3 im Vergleich zu den vorangehenden Ausführungsbeispielen,

Alle zuvor beschriebenen Ausgestaltungen der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

## Patentansprüche

1. Teilnehmerstation (10; 30) für ein serielles Bussystem (1), mit
einer Kommunikationssteuereinrichtung (11; 31) zum Steuern einer Kommunikation der Teilnehmerstation (10; 30) mit mindestens einer anderen Teilnehmerstation (10; 20; 30) des Bussystems (1), und
einer Sende-/Empfangseinrichtung (12; 32) zum Senden eines von der Kommunikationssteuereinrichtung (11; 31) erzeugten Sendesignals (TXD) als Rahmen (450; 4500) auf einen Bus (40) des Bussystems (1),
wobei sich für einen Rahmen (450; 4500), der zwischen Teilnehmerstationen (10, 20, 30) des Bussystems (1) ausgetauscht wird, die Bitzeit (t_bt) eines in der ersten Kommunikationsphase (451) auf den Bus (40) gesendeten Signals unterscheidet von einer Bitzeit (t_bt) eines in der zweiten Kommunikationsphase (452) gesendeten Signals,
wobei die Kommunikationssteuereinrichtung (11; 31) ausgestaltet ist, das Sendesignal (TXD) in einer ersten Betriebsart für einen ersten Rahmen (450) zu erzeugen, der gemäß einem vorgegebenen Kommunikationsprotokoll ausgestaltet ist, mit welchem andere Teilnehmerstationen (10; 20; 30) in dem Bussystem (1) kommunizieren,
wobei der gemäß dem vorgegebenen Kommunikationsprotokoll erzeugte Rahmen (450) ein Bit (SOF), das den Start des Rahmens (450) signalisiert, und einen Identifizierer (ID) aufweist, der in dem ersten Rahmen (450) direkt nach dem Bit (SOF) angeordnet ist, das den Start des ersten Rahmens (450) signalisiert,
wobei die Kommunikationssteuereinrichtung (11; 31) ausgestaltet ist, das Sendesignal (TXD) in einer zweiten Betriebsart für einen zweiten Rahmen (4500) derart zu erzeugen, dass in dem zweiten Rahmen (4500) zumindest einem Bit eine andere Funktion zugewiesen ist, als sie dem Bit in dem vorgegebenen Kommunikationsprotokoll zugewiesen ist,
wobei die Kommunikationssteuereinrichtung (11; 31) ausgestaltet ist, dem zumindest einen Bit in dem ersten Rahmen (450) eine Steuerfunktion und einen in dem vorgegebenen Kommunikationsprotokoll festgelegten festen Wert zuzuweisen,
wobei die Kommunikationssteuereinrichtung (11; 31) ausgestaltet ist, das zumindest eine Bit in dem zweiten Rahmen (4500) als Identifizierer-Bit zu verwenden, welches den Identifizierer (ID) des zweiten Rahmens (4500) verlängert im Vergleich zu dem Identifizierer (ID) des ersten Rahmens (450), und
wobei die Kommunikationssteuereinrichtung (11; 31) ausgestaltet ist, dem zumindest einen Bit (RRS) in dem zweiten Rahmen (4500) die Funktion des am wenigsten signifikanten Bits des Identifizierers (ID) zuzuweisen.

2. Teilnehmerstation (10; 30) nach Anspruch 1, wobei das zumindest eine Bit (RRS) die Bitzeit (t_bt) der ersten Kommunikationsphase (451) hat.

3. Teilnehmerstation (10; 30) nach Anspruch 1 oder 2,
wobei der Identifizierer (ID) des ersten Rahmens (450) die Priorität der Nachricht (45) angibt, und
wobei der Identifizierer (ID) des zweiten Rahmens (4500) Informationen über den Absender, den Inhalt und über die Priorität der Nachricht (45) aufweist.

4. Teilnehmerstation (10; 30) nach einem der vorangehenden Ansprüche, wobei das zumindest eine Bit mindestens ein Formatumschalt-Bit aufweist, welchem für die Umschaltung zwischen der ersten und zweiten Kommunikationsphase (451) in dem Kommunikationsprotokoll vorbestimmte Werte zugewiesen sind.

5. Teilnehmerstation (10; 30) nach Anspruch 4, wobei das mindestens eine Formatumschalt-Bit das FDF-Bit und/oder das FXF-Bit eines CAN FX Rahmens aufweist.

6. Teilnehmerstation (10; 30) nach einem der vorangehenden Ansprüche, zudem mit einem Protokoll-Erweiterungs-Block (112) zur Auswertung eines Felds für einen Datentyp (DT) und eines optional vorhandenen zusätzlichen Felds für einen Datentyp (DT) in Nutzdaten (4551) des Rahmens (450; 4500) und zur Ausführung der erforderlichen Behandlung der Nachricht (45) auf der Grundlage eines Auswerteergebnisses.

7. Teilnehmerstation (10; 30) nach einem der vorangehenden Ansprüche, wobei der für die Nachricht (45) gebildete Rahmen (450; 4500) kompatibel zu CAN FD aufgebaut ist.

8. Teilnehmerstation (10; 30) nach einem der vorangehenden Ansprüche, wobei in der ersten Kommunikationsphase (451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

9. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Teilnehmerstation (10; 30) nach einem der vorangehenden Ansprüche ist.

10. Verfahren zur Kommunikation in einem seriellen Bussystem (1), wobei das Verfahren mit einer Teilnehmerstation (10; 30) des Bussystems (1) ausgeführt wird, die eine Kommunikationssteuereinrichtung (11; 31) und eine Sende-/Empfangseinrichtung (12; 32) aufweist, wobei das Verfahren die Schritte aufweist,
Steuern, mit der Kommunikationssteuereinrichtung (11; 31) einer Kommunikation der Teilnehmerstation (10; 30) mit mindestens einer anderen Teilnehmerstation (10; 20; 30) des Bussystems (1), und
Senden, mit der Sende-/Empfangseinrichtung (12; 32), eines von der Kommunikationssteuereinrichtung (11; 31) erzeugten Sendesignals (TXD) als Rahmen (450; 4500) auf einen Bus (40) des Bussystems (1),
wobei sich für einen Rahmen (450; 4500), der zwischen Teilnehmerstationen (10, 20, 30) des Bussystems (1) ausgetauscht wird, die Bitzeit (t_bt) eines in der ersten Kommunikationsphase (451) auf den Bus (40) gesendeten Signals unterscheidet von einer Bitzeit (t_bt) eines in der zweiten Kommunikationsphase (452) gesendeten Signals,
wobei die Kommunikationssteuereinrichtung (11; 31) das Sendesignal (TXD) in einer ersten Betriebsart für einen ersten Rahmen (450) erzeugt, der gemäß einem vorgegebenen Kommunikationsprotokoll ausgestaltet ist, mit welchem andere Teilnehmerstationen (10; 20; 30) in dem Bussystem (1) kommunizieren,
wobei der gemäß dem vorgegebenen Kommunikationsprotokoll erzeugte Rahmen (450) ein Bit (SOF), das den Start des Rahmens (450) signalisiert, und einen Identifizierer (ID) aufweist, der in dem ersten Rahmen (450) direkt nach dem Bit (SOF) angeordnet ist, das den Start des ersten Rahmens (450) signalisiert,
wobei die Kommunikationssteuereinrichtung (11; 31) das Sendesignal (TXD) in einer zweiten Betriebsart für einen zweiten Rahmen (4500) derart erzeugt, dass in dem zweiten Rahmen (4500) zumindest einem Bit eine andere Funktion zugewiesen ist, als sie dem Bit in dem vorgegebenen Kommunikationsprotokoll zugewiesen ist,
wobei die Kommunikationssteuereinrichtung (11; 31) dem zumindest einen Bit (RRS) in dem ersten Rahmen (450) eine Steuerfunktion und einen in dem vorgegebenen Kommunikationsprotokoll festgelegten festen Wert zuweist,
wobei die Kommunikationssteuereinrichtung (11; 31) das zumindest eine Bit in dem zweiten Rahmen (4500) als Identifizierer-Bit verwendet, welches den Identifizierer (ID) des zweiten Rahmens (4500) verlängert im Vergleich zu dem Identifizierer (ID) des ersten Rahmens (450), und
wobei die Kommunikationssteuereinrichtung (11; 31) dem zumindest einen Bit (RRS) in dem zweiten Rahmen (4500) die Funktion des am wenigsten signifikanten Bits des Identifizierers (ID) zuweist.

## Claims

1. Subscriber station (10; 30) for a serial bus system (1), having a communication control device (11; 31) for controlling communication between the subscriber station (10; 30) and at least one other subscriber station (10; 20; 30) of the bus system (1), and
a transmitting/receiving device (12; 32) for transmitting a transmission signal (TXD) generated by the communication control device (11; 31) to a bus (40) of the bus system (1) as a frame (450; 4500),
wherein, for a frame (450; 4500) exchanged between subscriber stations (10, 20, 30) of the bus system (1), the bit time (t_bt) of a signal transmitted to the bus (40) in the first communication phase (451) differs from a bit time (t_bt) of a signal transmitted in the second communication phase (452),
wherein the communication control device (11; 31) is configured to generate the transmission signal (TXD) in a first operating mode for a first frame (450), which is configured in accordance with a predefined communication protocol that other subscriber stations (10; 20; 30) in the bus system (1) use to communicate,
wherein the frame (450) generated in accordance with the predefined communication protocol has a bit (SOF) that signals the start of the frame (450) and an identifier (ID) arranged in the first frame (450) directly after the bit (SOF) that signals the start of the first frame (450),
wherein the communication control device (11; 31) is configured to generate the transmission signal (TXD) in a second operating mode for a second frame (4500) in such a way that at least one bit in the second frame (4500) is assigned a different function from that assigned to the bit in the predefined communication protocol,
wherein the communication control device (11; 31) is configured to assign a control function and a fixed value specified in the predefined communication protocol to the at least one bit in the first frame (450),
wherein the communication control device (11; 31) is configured to use the at least one bit in the second frame (4500) as an identifier bit that extends the identifier (ID) of the second frame (4500) compared to the identifier (ID) of the first frame (450), and
wherein the communication control device (11; 31) is configured to assign the function of the least significant bit of the identifier (ID) to the at least one bit (RRS) in the second frame (4500).

2. Subscriber station (10; 30) according to Claim 1, wherein the at least one bit (RRS) has the bit time (t_bt) of the first communication phase (451).

3. Subscriber station (10; 30) according to Claim 1 or 2,
wherein the identifier (ID) of the first frame (450) indicates the priority of the message (45), and
wherein the identifier (ID) of the second frame (4500) has information about the sender, the content and about the priority of the message (45).

4. Subscriber station (10; 30) according to one of the preceding claims, wherein the at least one bit has at least one format switching bit to which predetermined values are assigned for the switch between the first and second communication phases (451) in the communication protocol.

5. Subscriber station (10; 30) according to Claim 4, wherein the at least one format switching bit comprises the FDF bit and/or the FXF bit of a CAN FX frame.

6. Subscriber station (10; 30) according to one of the preceding claims, moreover having a protocol extension block (112) for evaluating a field for a data type (DT) and an optionally present additional field for a data type (DT) in payload data (4551) of the frame (450; 4500) and for performing the necessary handling of the message (45) on the basis of an evaluation result.

7. Subscriber station (10; 30) according to one of the preceding claims, wherein the frame (450; 4500) formed for the message (45) is designed in a manner compatible with CAN FD.

8. Subscriber station (10; 30) according to one of the preceding claims, wherein it is negotiated, in the first communication phase (451), which of the subscriber stations (10, 20, 30) of the bus system (1) receives at least temporarily exclusive, collision-free access to the bus (40) in the subsequent, second communication phase (452).

9. Bus system (1) having
a bus (40), and
at least two subscriber stations (10; 20; 30) that are connected to one another via the bus (40) in such a way that they can communicate serially with one another, and at least one subscriber station (10; 30) of which is a subscriber station (10; 30) according to one of the preceding claims.

10. Method for communication in a serial bus system (1), the method being carried out using a subscriber station (10; 30) of the bus system (1) that comprises a communication control device (11; 31) and a transmitting/receiving device (12; 32), wherein the method comprises the steps of using the communication control device (11; 31) to control communication between the subscriber station (10; 30) and at least one other subscriber station (10; 20; 30) of the bus system (1), and
using the transmitting/receiving device (12; 32) to transmit a transmission signal (TXD) generated by the communication control device (11; 31) to a bus (40) of the bus system (1) as a frame (450; 4500),
wherein, for a frame (450; 4500) exchanged between subscriber stations (10, 20, 30) of the bus system (1), the bit time (t_bt) of a signal transmitted to the bus (40) in the first communication phase (451) differs from a bit time (t_bt) of a signal transmitted in the second communication phase (452),
wherein the communication control device (11; 31) generates the transmission signal (TXD) in a first operating mode for a first frame (450), which is configured in accordance with a predefined communication protocol that other subscriber stations (10; 20; 30) in the bus system (1) use to communicate, wherein the frame (450) generated in accordance with the predefined communication protocol has a bit (SOF) that signals the start of the frame (450) and an identifier (ID) arranged in the first frame (450) directly after the bit (SOF) that signals the start of the first frame (450),
wherein the communication control device (11; 31) generates the transmission signal (TXD) in a second operating mode for a second frame (4500) in such a way that at least one bit in the second frame (4500) is assigned a different function from that assigned to the bit in the predefined communication protocol,
wherein the communication control device (11; 31) assigns a control function and a fixed value specified in the predefined communication protocol to the at least one bit (RRS) in the first frame (450),
wherein the communication control device (11; 31) uses the at least one bit in the second frame (4500) as an identifier bit that extends the identifier (ID) of the second frame (4500) compared to the identifier (ID) of the first frame (450), and
wherein the communication control device (11; 31) assigns the function of the least significant bit of the identifier (ID) to the at least one bit (RRS) in the second frame (4500).

## Revendications

1. Station d'abonné (10 ; 30) pour un système de bus série (1), comprenant un dispositif de commande de communication (11 ; 31) destiné à commander une communication de la station d'abonné (10 ; 30) avec au moins une autre station d'abonné (10 ; 20 ; 30) du système de bus (1), et
un dispositif d'émission/réception (12 ; 32) destiné à émettre un signal d'émission (TXD) généré par le dispositif de commande de communication (11 ; 31) sous forme de trame (450 ; 4500) sur un bus (40) du système de bus (1),
pour une trame (450 ; 4500) qui est échangée entre des stations d'abonné (10, 20, 30) du système de bus (1), le temps de bit (t_bt) d'un signal envoyé sur le bus (40) dans la première phase de communication (451) étant différent d'un temps de bit (t_bt) d'un signal envoyé dans la deuxième phase de communication (452),
le dispositif de commande de communication (11 ; 31) étant conçu pour générer le signal d'émission (TXD) dans un premier mode de fonctionnement pour une première trame (450) configurée selon un protocole de communication prédéfini avec lequel les autres stations d'abonnés (10 ; 20 ; 30) communiquent dans le système de bus (1),
la trame générée selon le protocole de communication prédéfini (450) comportant un bit (SOF) signalant le début de la trame (450) et un identifiant (ID) placé dans la première trame (450) directement après le bit (SOF) signalant le début de la première trame (450),
le dispositif de commande de communication (11 ; 31) étant conçu pour générer le signal d'émission (TXD) dans un deuxième mode de fonctionnement pour une deuxième trame (4500) de telle sorte que, dans la deuxième trame (4500), au moins un bit soit affecté à une fonction différente de celle qui est affectée au bit dans le protocole de communication prédéfini,
le dispositif de commande de communication (11 ; 31) étant conçu pour affecter audit au moins un bit dans la première trame (450) une fonction de commande et une valeur fixe spécifiée dans le protocole de communication prédéfini,
le dispositif de commande de communication (11 ; 31) étant conçu pour utiliser ledit au moins un bit dans la deuxième trame (4500) comme bit d'identification qui prolonge l'identifiant (ID) de la deuxième trame (4500) par comparaison à l'identifiant (ID) de la première trame (450), et
le dispositif de commande de communication (11 ; 31) étant conçu pour affecter audit au moins un bit (RRS) dans la deuxième trame (4500) la fonction du bit de poids le plus faible de l'identifiant (ID).

2. Station d'abonné (10 ; 30) selon la revendication 1, ledit au moins un bit (RRS) possédant le temps de bit (t_bt) de la première phase de communication (451).

3. Station d'abonné (10 ; 30) selon la revendication 1 ou la revendication 2, l'identifiant (ID) de la première trame (450) indiquant la priorité du message (45), et
l'identifiant (ID) de la deuxième trame (4500) contenant des informations concernant l'expéditeur, le contenu et la priorité du message (45).

4. Station d'abonné (10 ; 30) selon l'une des revendications précédentes, ledit au moins un bit comportant au moins un bit de commutation de format auquel des valeurs prédéterminées sont affectées dans le protocole de communication pour la commutation entre la première et la deuxième phase de communication (451).

5. Station d'abonné (10 ; 30) selon la revendication 4, ledit au moins un bit de commutation de format comportant le bit FDF et/ou le bit FXF d'une trame CAN FX.

6. Station d'abonné (10 ; 30) selon l'une des revendications précédentes, comprenant en outre un bloc d'extension de protocole (112) destiné à évaluer un champ pour un type de données (DT) et un champ supplémentaire présent en option pour un type de données (DT) dans des données utiles (4551) de la trame (450 ; 4500) et pour exécuter le traitement nécessaire du message (45) sur la base d'un résultat d'évaluation.

7. Station d'abonné (10 ; 30) selon l'une des revendications précédentes, la trame (450 ; 4500) formée pour le message (45) présentant une structure compatible avec CAN FD.

8. Station d'abonné (10 ; 30) selon l'une des revendications précédentes, celle des stations d'abonné (10, 20, 30) du système de bus (1) qui obtient, dans la deuxième phase de communication (452) qui suit, un accès au bus (40) au moins temporairement exclusif, sans collision, étant négociée dans la première phase de communication (451).

9. Système de bus (1), comprenant
un bus (40), et
au moins deux stations d'abonnés (10 ; 20 ; 30), lesquelles sont reliées l'une à l'autre par le biais du bus (40), de telle sorte qu'elles peuvent communiquer en série entre elles et parmi lesquelles au moins une station d'abonné (10 ; 30) est une station d'abonné (10 ; 30) selon l'une des revendications précédentes.

10. Procédé de communication dans un système de bus série (1), le procédé étant mis en œuvre avec une station d'abonné (10 ; 30) du système de bus (1), qui comprend un dispositif de commande de communication (11 ; 31) et un dispositif d'émission/réception (12 ; 32), le procédé comprenant les étapes suivantes :
commande, avec le dispositif de commande de communication (11 ; 31), d'une communication de la station d'abonné (10 ; 30) avec au moins une autre station d'abonné (10 ; 20 ; 30) du système de bus (1), et
émission, avec le dispositif d'émission/réception (12 ; 32), d'un signal d'émission (TXD) généré par le dispositif de commande de communication (11 ; 31) sous forme de trame (450 ; 4500) sur un bus (40) du système de bus (1),
pour une trame (450 ; 4500) qui est échangée entre des stations d'abonné (10, 20, 30) du système de bus (1), le temps de bit (t_bt) d'un signal envoyé sur le bus (40) dans la première phase de communication (451) étant différent d'un temps de bit (t_bt) d'un signal envoyé dans la deuxième phase de communication (452),
le dispositif de commande de communication (11 ; 31) générant le signal d'émission (TXD) dans un premier mode de fonctionnement pour une première trame (450) configurée selon un protocole de communication prédéfini avec lequel les autres stations d'abonnés (10 ; 20 ; 30) communiquent dans le système de bus (1),
la trame générée selon le protocole de communication prédéfini (450) comportant un bit (SOF) signalant le début de la trame (450) et un identifiant (ID) placé dans la première trame (450) directement après le bit (SOF) signalant le début de la première trame (450),
le dispositif de commande de communication (11 ; 31) générant le signal d'émission (TXD) dans un deuxième mode de fonctionnement pour une deuxième trame (4500) de telle sorte que dans la deuxième trame (4500), au moins un bit soit affecté à une fonction différente de celle qui est affectée au bit dans le protocole de communication prédéfini,
le dispositif de commande de communication (11 ; 31) affectant audit au moins un bit (RRS) dans la première trame (450) une fonction de commande et une valeur fixe spécifiée dans le protocole de communication prédéfini,
le dispositif de commande de communication (11 ; 31) utilisant ledit au moins un bit dans la deuxième trame (4500) comme bit d'identification qui prolonge l'identifiant (ID) de la deuxième trame (4500) par comparaison à l'identifiant (ID) de la première trame (450), et
le dispositif de commande de communication (11 ; 31) affectant audit au moins un bit (RRS) dans la deuxième trame (4500) la fonction du bit de poids le plus faible de l'identifiant (ID).
